# EUROPEAN PATENT APPLICATION

(11) **EP 4 797 807 A1**
(43) Date of publication of application: **26.08.2026**
(21) Application number: 24884093.6
(22) Date of filing: 06.08.2024
(51) Int. Cl.: H04W 52/02

(54) **COMMUNICATION METHOD AND COMMUNICATION APPARATUS**

(30) Priority: 03.11.2023 CN 202311467027
(71) Applicant: HUAWEI TECHNOLOGIES CO., LTD., Shenzhen 518129 (CN)
(72) Inventor: JIAO, Minghan, Shenzhen, Guangdong 518129 (CN); LI, Ruijie, Shenzhen, Guangdong 518129 (CN)
(74) Representative: Goddar, Heinz J.
(86) International application number: PCT/CN2024/110146
(87) International publication number: WO 2025/092086

(57) **Abstract**

Embodiments of this application provide a communication method and a communication apparatus. The method includes: A base station sends configuration information indicating a first resource of control information and a second resource of first information, and second information is at least one of synchronization information or channel information. The first resource is associated with the second resource. The base station and a terminal exchange the control information on the first resource, and exchange the synchronization information or the channel information on the second resource. In the method, a resource of the control information is associated with a resource of the synchronization information or the channel information, so that the terminal can complete synchronization or channel measurement when there is a data transmission requirement. This avoids power consumption caused by the base station periodically sending common signals for terminal synchronization, or avoids signaling overheads caused to the base station and the terminal due to the terminal periodically reporting information.

## Description

This application claims priority to Chinese Patent Application No. 202311467027.7, filed with the China National Intellectual Property Administration on November 3, 2023 and entitled "COMMUNICATION METHOD AND APPARATUS", which is incorporated herein by reference in its entirety.

### TECHNICAL FIELD

This application relates to the communication field, and in particular, to a communication method and a communication apparatus.

### BACKGROUND

With evolution of communication technologies, a spectrum used for wireless communication has become increasingly wider, a quantity of transmit antennas of a base station has grown, and power consumption has continued to rise. Meanwhile, as a higher frequency band is deployed in a network during a communication process, a coverage area becomes smaller, resulting in a denser deployment of base stations and consequently higher power consumption for an entire network. For example, power consumption of a single 5G base station is usually two to three times that of a typical 4G base station.

In a current communication system, a base station needs to periodically send some common signals, so that a terminal device identifies a network device and accesses the network. For a cell having no service transmission requirement or having a low service transmission requirement, the base station still needs to periodically send the common signals, which results in large overheads for the base station. Therefore, how to implement energy saving for the base station has attracted increasing attention. One of the main technical means for reducing power consumption of the base station is to reduce signal transmission of the base station.

### SUMMARY

This application provides a communication method and a communication apparatus, to facilitate energy saving of a network device.

According to a first aspect, a communication method is provided and is applied to a terminal device. The method may be performed by a terminal device, or may be performed by a component of the terminal device, such as a processor, a chip, or a chip system of the terminal device, or may be implemented by a logical module or software that can implement all or some functions of the terminal device. For example, the method may be performed by the terminal device. The method includes: The terminal device receives configuration information, where the configuration information indicates a first resource and a second resource, the first resource is a resource of control information, the control information is used to schedule data transmission, the second resource is a resource of first information, and the first information is a resource of channel information and/or synchronization information; the terminal device receives the control information on the first resource, and receives the synchronization information or sends the channel information on the second resource, where the first resource is associated with the second resource.

In a possible implementation, that the first resource is associated with the second resource is specifically that the first resource and the second resource are separated by M time units in time domain, and M is a positive integer.

In a possible implementation, that the first resource is associated with the second resource is specifically that the first resource and the second resource are located in a same time unit, or the first resource and the second resource belong to a same transmission structure. In this manner, transmission of the first information and transmission of the control information is centrally completed in a short time, to avoid frequent transmission and reduce power consumption of the terminal device and the network device. For a manner in which the first resource and the second resource belong to a same frame structure, in this manner, the base station can complete scheduling with reduced signaling overheads.

In a possible implementation, that the first resource is associated with the second resource is specifically that the first resource and the second resource are contiguous in time domain.

In this manner, the first resource and the second resource are contiguous in time domain, so that the terminal device can quickly complete synchronization or quickly align channel information with the network device when there is a data transmission requirement. In this manner, transmission of the first information and transmission of the control information may be performed consecutively, and the network device and the terminal device may quickly align the first information and the control information, thereby reducing a time ratio of transmission of the first information and the control information, and reducing power consumption of the terminal device and the network device.

In a possible implementation, the second resource is located before the first resource.

In this manner, the terminal device first receives the synchronization information, and then receives the control information. The terminal receives the synchronization information before receiving the scheduling information. This can improve reliability of receiving the scheduling information by the terminal. In addition, because the control information is used to schedule data transmission, the terminal receives the synchronization information before the data transmission and before the control information, providing the terminal with more time to complete synchronization.

In a possible implementation, the second resource is located after the first resource. In a possible implementation, that the first resource is associated with the second resource is specifically that the first resource and the second resource are located in a first time window.

In a possible implementation, the first time window meets at least one of the following: a start time unit of the first time window is a start time unit of the second resource, or an end time unit of the first time window is an end time unit of the first resource.

In a possible implementation, that the first resource is associated with the second resource is specifically: the terminal device determines a second time window based on the second resource, where the first resource is located in the second time window; or the terminal device determines a second time window based on the first resource, where the second resource is located in the second time window.

In a possible manner, the second time window meets one or more of the following: An X1^{th} time unit following the first resource is a time unit in which a start position of the second time window is located, or an X2^{th} time unit following the first resource is a time unit in which an end position of the second time window is located.

In a possible implementation, the terminal device receives the synchronization information or sends the channel state information in a K1^{th} time unit following the first resource, or the terminal device receives synchronization information after the K1^{th} time unit following the first resource.

In a possible implementation, the terminal device receives the synchronization information or sends the channel information before a K2^{th} time unit following the first resource, or the terminal device completes receiving the synchronization information or sending the channel information before the K2^{th} time unit following the first resource.

In a possible implementation, there is a first time length between the second resource and the first resource, and the first time length is less than or equal to a length of the second time window.

In a possible implementation, receiving the control information on the first resource, and receiving the synchronization information or sending the channel information on the second resource are specifically: when the synchronization information is received on the second resource, receiving the control information on the first resource.

In this manner, the terminal device may receive the control information after receiving the synchronization information or sending the channel information. This avoids a case in which the terminal device fails to complete synchronization or fails to align the channel information with the network device, yet still receives the control information, leading to a transmission abnormality.

In a possible implementation, the synchronization information is a downlink reference signal, or the synchronization information is time-frequency information.

In a possible implementation, the synchronization information is an SSB or a TRS.

In a possible implementation, the method further includes sending second information. The second information is used to trigger a network device to send the synchronization information.

In this manner, the second information may be understood as request information of the synchronization information, and the network device may send the synchronization information after the terminal device requests the network device to send the synchronization information. Power consumption of the network device can be further reduced.

In a possible implementation, the channel information is an uplink reference signal, or the channel information is channel state information.

In a possible implementation, the channel information is the channel state information, and the method further includes: The terminal device receives a channel state information reference signal, and sends the channel state information based on the channel state information reference signal.

In a possible implementation, before the terminal device receives the configuration information, the method further includes: The terminal sends a first uplink signal. The first uplink signal is used to trigger the network device to send at least one of the control information, the synchronization information, or the channel information.

In this manner, the first uplink signal may alternatively be understood as a wake-up signal. After receiving the first uplink signal, the network device sends one or more of the control information, the synchronization information, or the channel information. If the network device does not receive the first uplink signal, the network device may not send one or more of the control information, the synchronization information, or the channel information in a corresponding cell, which can implement energy saving of the network device.

In a possible implementation, the first uplink signal is associated with the control information in time domain.

According to a second aspect, a communication method is provided and is applied to a network device. The method may be performed by the network device, or may be performed by a component of the network device, such as a processor, a chip, or a chip system of the network device, or may be implemented by a logical module or software that can implement all or some functions of the network device. For example, the method may be performed by a terminal device. The method includes: The network device sends configuration information, where the configuration information indicates a first resource and a second resource, the first resource is a resource of control information, the control information is used to schedule data transmission, the second resource is a resource of first information, and the first information is a resource of channel information and/or synchronization information, where the first resource is associated with the second resource.

In this manner, a resource of the control information is associated with a resource of the first information. The network device may not need to frequently send or receive the first information, and the terminal device may complete synchronization in a timely manner and/or align the channel information with the network device in a timely manner when there is a data transmission requirement. According to the foregoing method, the network device may send a common signal based on a long period, to enable the terminal to access a network, or the network device enters an energy-saving mode. When there is a data transmission requirement, resources of the control information, the synchronization information, or the channel information are configured based on the configuration information.

In an optional manner, the network device sends the control information on the first resource, and sends the synchronization information or receives the channel information on the second resource.

In an optional manner, the synchronization information is time-frequency information, and the method further includes: The network device receives second information. The second information is used to trigger the network device to send the synchronization information.

In an optional manner, the channel information is channel state information, and the method further includes: The network device sends a channel state information reference signal.

In a possible implementation, the channel information is the channel state information, and the method further includes: The network device sends the channel state information reference signal.

In a possible implementation, before the network device sends the configuration information, the method further includes: The network device receives a first uplink signal. The first uplink signal is used to trigger the network device to send at least one of the control information, the synchronization information, or the channel information.

In this manner, the first uplink signal may alternatively be understood as a wake-up signal, and is used to enable the network device to switch from an energy-saving mode to a communication mode. After receiving the first uplink signal, the network device sends one or more of the control information, the synchronization information, or the channel information. If the network device does not receive the first uplink signal, the network device may not send one or more of the control information, the synchronization information, or the channel information in a corresponding cell, which can implement energy saving of the network device.

For some possible implementations and beneficial effects of the second aspect, refer to the first aspect. Details are not described herein again.

According to a third aspect, a communication apparatus is provided. The communication apparatus is configured to implement the communication method in the first aspect. The communication apparatus may be the terminal device in the first aspect, or an apparatus included in the first terminal device, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible manner, the communication apparatus includes a receiving unit, configured to receive configuration information, and receive control information and synchronization information. Alternatively, the communication apparatus includes a receiving unit and a sending unit, where the receiving unit is configured to receive control information, and the sending unit is configured to send channel information.

For some possible implementations and descriptions of the configuration information, the control information, the synchronization information, and the channel information in the third aspect, refer to the first aspect. Details are not described herein again.

According to a fourth aspect, a communication apparatus is provided. The communication apparatus is configured to implement the communication method in the second aspect. The communication apparatus may be the network device in the second aspect, or an apparatus, such as a chip, included in the network device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In a possible manner, the communication apparatus includes a sending unit, configured to send configuration information, and send control information and synchronization information. Alternatively, the communication apparatus includes a receiving unit and a sending unit, where the receiving unit is configured to receive channel information, and the sending unit is configured to send configuration information, control information, and synchronization information.

For some possible implementations and descriptions of the configuration information, the control information, the synchronization information, and the channel information in the fourth aspect, refer to the second aspect. Details are not described herein again.

According to a fifth aspect, a computer-readable storage medium is provided, including instructions. When the instructions are run, any possible method in the first aspect is implemented, or any possible method in the second aspect is implemented.

According to a sixth aspect, a communication system is provided, including at least one communication apparatus according to the third aspect and at least one communication apparatus according to the second aspect.

According to a seventh aspect, a communication method is provided, including: A network device sends configuration information, where the configuration information indicates a first resource and a second resource, the first resource is a resource of control information, the control information is used to schedule data transmission, the second resource is a resource of first information, and the first information is a resource of channel information and/or synchronization information; a terminal device receives the control information on the first resource, and receives synchronization information or sends channel information on the second resource, where the first resource is associated with the second resource.

For some possible implementations of the seventh aspect, refer to related descriptions of the first aspect. Details are not described again.

According to an eighth aspect, a computer program product is provided. The computer program product includes instructions. When the instructions are run, the method according to any one of the first aspect is implemented, or the method according to any one of the second aspect is implemented.

### BRIEF DESCRIPTION OF DRAWINGS

FIG. 1 is a diagram of a communication system according to this application;
FIG. 2 is a diagram of time units at different granularities according to this application;
FIG. 3 is a schematic flowchart of a communication method according to this application;
FIG. 4 is a diagram of a relationship between a first resource and a second resource according to this application;
FIG. 5 is another diagram of a relationship between a first resource and a second resource according to this application;
FIG. 6 is another diagram of a relationship between a first resource and a second resource according to this application;
FIG. 7 is a diagram of a communication apparatus according to this application; and
FIG. 8 is a diagram of another communication apparatus according to this application.

### DESCRIPTION OF EMBODIMENTS

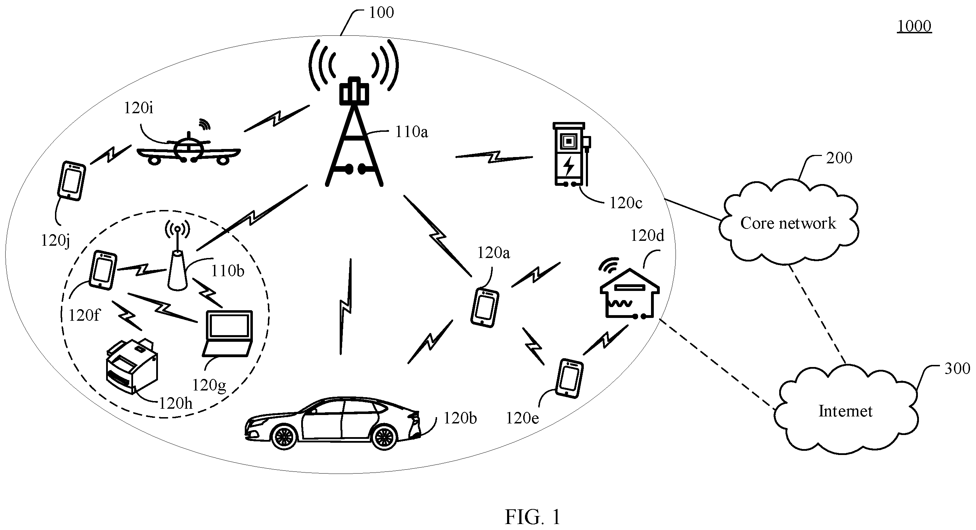

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help the terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may collaborate to assist the terminal in implementing radio access, and different RAN nodes respectively implement some functions of the base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

A terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered by a signal from a neighboring cell.

For ease of description, the following specifically describes terms in this application.

### (1) Time unit

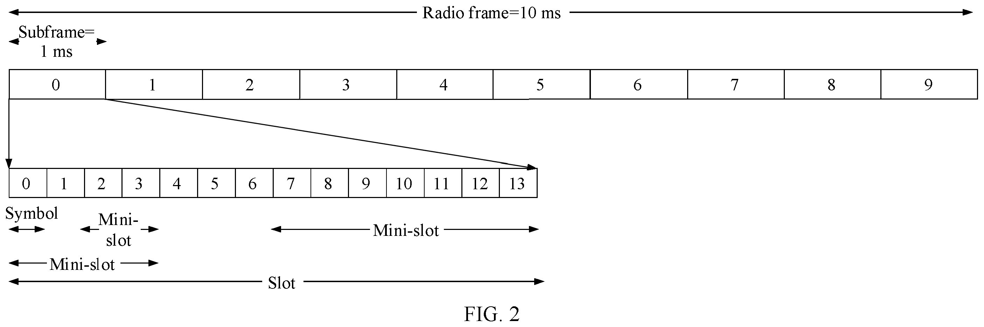

The time unit is a time domain unit used for signal transmission, and is a granularity in time domain. One time unit includes a plurality of symbols. For example, one time unit may be one radio frame (radio frame), one subframe (subframe), one slot (slot), one mini-slot (mini-slot), or one symbol. FIG. 2 shows an example of a relationship between time units at different granularities. In FIG. 2, a time domain length of one radio frame is 10 ms. One radio frame may include 10 subframes, and a time domain length of one subframe is 1 ms. One subframe may include one or more slots. Specifically, a quantity of slots included in one subframe is related to a subcarrier spacing (Subcarrier Spacing, SCS). When the SCS is 15 kHz, a time domain length of one slot is 1 ms. One slot includes 14 symbols.

### (2) Channel information

During transmission of a signal from a transmit end to a receive end through a wireless channel, scattering, reflection, and attenuation of energy with distance may occur, resulting in fading. The channel information represents a characteristic of the wireless channel and carries channel content related to the channel. A communication apparatus usually obtains the channel information through a reference signal and channel measurement. The reference signal is a known signal provided by a transmit end for a receive end for channel estimation or channel sounding. The reference signal may be used for channel measurement, interference measurement, and the like. For example, the terminal obtains the channel information by measuring parameters such as reference signal received quality (reference signal receiving quality, RSRQ) and a signal-to-noise ratio (signal-noise ratio, SNR). A downlink reference signal may be, for example, a channel state information reference signal (channel state information-reference signal, CSI-RS). A base station sends the CSI-RS to a terminal. The terminal measures a channel based on the CSI-RS, obtains channel state information (channel state information, CSI), and reports the CSI to the base station. The terminal and the base station align understanding of a channel state. An uplink reference signal may be, for example, a sounding reference signal (sounding reference signal, SRS). The terminal sends the SRS to the base station, and the base station measures a channel based on the SRS, to learn of a channel state.

There are three reporting manners of the channel information: periodic reporting, semi-static reporting, and aperiodic reporting. For periodic reporting and semi-static reporting of the channel information, the channel information is configured with a periodic transmission resource, and the base station and the terminal send or receive the channel information on the periodic transmission resource based on the configuration. Aperiodic reporting of the channel information is triggered by sending downlink control information by the base station. In addition, aperiodic reporting of the channel information is usually performed once. The terminal sends the channel information once, and transmission of the channel information is thereby completed. To ensure timeliness of the channel information, the base station configures periodic reporting of the channel information for the terminal.

It can be learned from the foregoing analysis that, in a current communication system, both configuration of the channel information and configuration of synchronization information are independent of data transmission. The base station periodically sends the synchronization information to implement synchronization of the terminal, or the terminal periodically reports the channel information to obtain a channel state.

### (3) Synchronization information

In this application, information used by a communication apparatus to complete synchronization is also referred to as synchronization information for short, and the synchronization may include at least one of time domain synchronization or frequency domain synchronization. In a current NR communication system, there are mainly two types of signals used for time-frequency synchronization: a synchronization signal and PBCH block (synchronization signal and PBCH block, SSB) and a TRS.

The SSB is a periodically sent common signal and occupies 20 resource blocks (resource block, RB) in frequency domain. The SSB may include two parts: synchronization information (synchronization signal, SS) and a physical broadcast channel (physical broadcast channel block, PBCH). The SS may include primary synchronization information (primary synchronization signal, PSS) and secondary synchronization information (secondary synchronization signal, SSS). Therefore, it may alternatively be considered that, the SSB includes three parts, that is, the SSB includes the PSS, the SSS, and the PBCH. The terminal periodically detects the SSB, and completes initial time-frequency synchronization (hereinafter referred to as first-level synchronization) based on the received SSB. In addition to the SSB, the base station may further send a (tracking reference signal, TRS) for terminal synchronization. In frequency domain, the TRS contains a larger quantity of sent pilots in frequency domain, and a timing offset measurement resolution of the TRS is higher. In time domain, the SSS and the PSSS are usually separated by two symbols, while the TRS occupies two consecutive slots. Within each slot, transmission resources of the TRS are separated by four symbols, and a frequency offset measurement resolution of the TRS is higher. Therefore, a synchronization precision of the TRS is higher than that of the SSB. The TRS may be understood as a special CSI-RS, and the terminal may complete more refined time-frequency synchronization (referred to as second-level synchronization below) based on the TRS. Similar to reporting of the foregoing channel information, the TRS also supports periodic transmission, semi-static transmission, or aperiodic transmission. To ensure timeliness of time-frequency synchronization of the terminal, the base station configures periodic transmission of the TRS for the terminal.

### (4) Transmission structure

The transmission structure may be understood as transmitting a plurality of pieces of information as a whole, that is, transmitting one transmission structure. From a perspective of a transmit end, all information in the transmission structure should be sent at a time. From a perspective of a receive end, all information in the transmission structure should be received at a time. A transmission structure may be a frame structure, an independent transmission channel, or a fixed format.

### (5) Base station energy saving

A base station needs to periodically send some common signals, so that a terminal identifies the base station and accesses a network. For a cell having no service transmission requirement or having a low service transmission requirement, the base station still needs to periodically send the common signals, which results in large overheads for the base station. In a possible energy-saving manner, only long-period common signal transmission exists between the base station and the terminal, and a transmission period of the common signal is prolonged, so that a frequency of transmitting the common signal by the base station is reduced, thereby implementing energy saving of the base station. In this manner, the base station cannot obtain the channel information of the terminal in a timely manner, and the terminal may not access a network in a timely manner. When there is a data transmission requirement, the base station cannot provide accurate scheduling for the terminal in a timely manner. In addition, because a transmission period of the common signal is long, a period in which the terminal performs time-frequency synchronization is also long. As a result, when a requirement for a data transmission rate is high, reliability of data transmission is low.

Based on the foregoing analysis, this application proposes a communication method. A configuration of the channel information and/or the synchronization information is associated with scheduling of the data transmission, so that receiving performance on a terminal side is ensured in a scenario in which load of the base station is not increased.

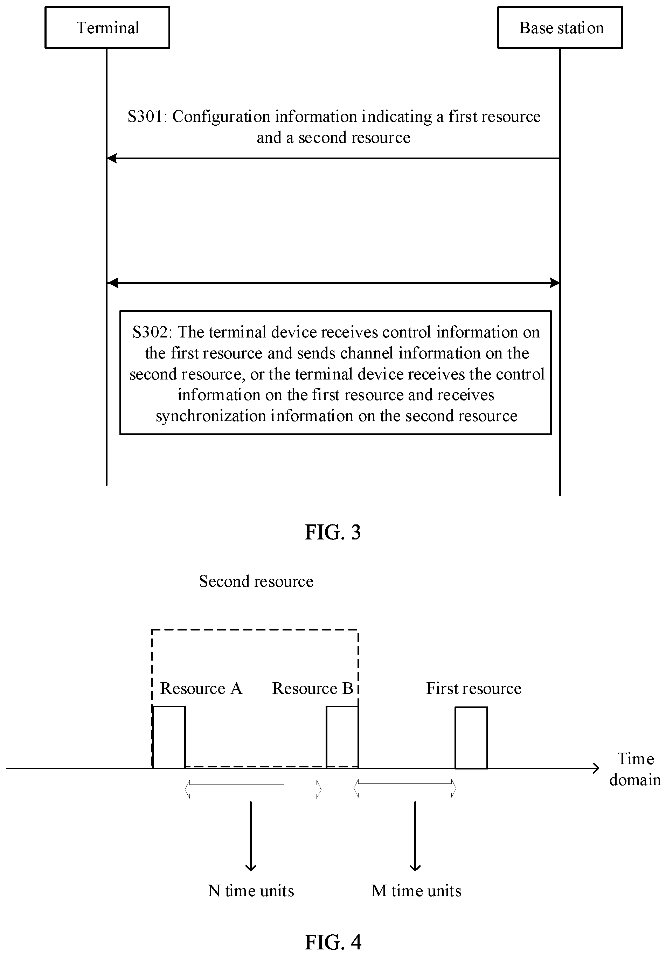

FIG. 3 is a diagram of a communication method according to this application. The method shown in FIG. 3 includes steps S301 and S302.

S301: A base station sends configuration information, and correspondingly, a terminal receives the configuration information.

Specifically, the configuration information indicates a first resource and a second resource, the first resource is a resource of control information, the control information is used to schedule data transmission, the second resource is a resource of first information, and the first information is a resource of channel information and/or synchronization information.

In a possible manner, the configuration information is one information element, and both the first resource and the second resource are configured. In another possible manner, the configuration information is a plurality of information elements, and the first resource and the second resource are separately configured for different information elements, or the first resource and the second resource are jointly configured for a plurality of information elements.

S302: The terminal receives the control information on the first resource, and receives the synchronization information or sends the channel information on the second resource.

Specifically, the terminal may obtain the first resource and the second resource by using the configuration information in step S301, and the terminal receives or sends information on a corresponding resource.

The synchronization information in this application is information that can be used for terminal synchronization. In a possible manner, the synchronization information may be time-frequency information, and the time-frequency information may include at least one of a timing offset or a frequency offset. The terminal adjusts timing and frequency based on the time-frequency information, to implement synchronization. For example, the synchronization information is an SSB. In another possible manner, the synchronization information is downlink reference information, and the terminal measures a timing offset or a frequency offset based on the reference information, and performs time and frequency correction, thereby completing synchronization. For example, the synchronization information is a TRS. It should be noted that when the synchronization information is a reference signal, for example, when the synchronization information is a TRS, it may be considered by default that the terminal has completed first-level synchronization, and the terminal completes second-level synchronization based on the TRS.

The channel information in this application is information that can be used for channel measurement, or is understood as information that is sent by a transmit end and that can be used by a receive end to learn of a channel state. In a possible manner, the channel information is an uplink reference signal, for example, an SRS, and is used by the base station to measure a channel and learn of a channel state. In another possible manner, the channel information is a channel state obtained by the terminal through measurement and reported to the base station. For example, the channel information is CSI.

In a possible manner, the first resource is associated with the second resource. In this manner, the first resource is associated with the second resource, that is, a configuration of the control information for scheduling the data transmission is associated with a configuration of the first information. The terminal and the base station may complete channel measurement or synchronization in a timely manner when there is a data transmission requirement. The base station does not need to frequently send common signals, which helps save energy of the base station, and can also avoid a communication abnormality that may occur when the terminal and the base station fail to complete synchronization during data transmission or fail to communicate based on aligned channel state information.

This application provides the following possible implementations of an association relationship between the first resource and the second resource in time domain. In other words, an association between the first resource and the second resource in this application may be replaced in the following manner.

Manner 1: The first resource and the second resource are separated by M time units in time domain, where M is a positive integer. Manner 1 is also understood as that the first resource is associated with the second resource by setting a time-domain interval between the first resource and the second resource. In this manner, if the first information includes the synchronization information and the channel information, optionally, the second resource includes a resource A and a resource B. The resource A is the resource of the synchronization information, and the resource B is a resource of the channel information. The resource A and the resource B may be separated by a specific time unit, for example, separated by N time units, or the resource A and the resource B may be contiguous. For example, FIG. 4 shows an example in which the resource A and the resource B are separated by N time units. In FIG. 4, for example, a time interval is an interval between a time unit in which an end position of the resource A is located and a time unit in which a start position of the resource B is located. The time unit in this application may alternatively be an interval between time units in which start positions of two resources are located, or an interval between time units in which end positions of the two resources are located, or an interval between a time unit in which a start position of one resource is located and a time unit in which an end position of the other resource is located.

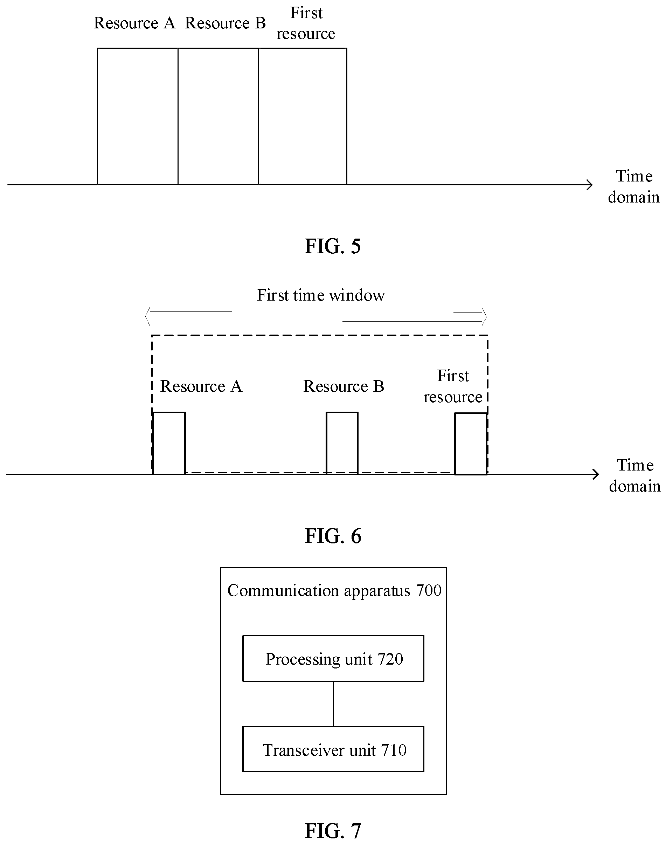

Manner 2: The second resource and the first resource are contiguous in time domain. Manner 2 may alternatively be understood as a case in which a value of M is 0 in Manner 1. When the second resource includes a resource A of the synchronization information and a resource B of the channel information, the resource A and the resource B may be contiguous, that is, N may be equal to 0. FIG. 5 shows an example in which the second resource and the first resource may be contiguous in time domain. In FIG. 5, the resource A, the resource B, and the first resource are contiguous in time domain. It should be noted that the first resource and the second resource in this application are contiguous in time domain, which may alternatively be replaced with the following description: A last time unit of the first resource is adjacent to a start time unit of the second resource, and a next time unit of the last time unit of the first resource is the start time unit of the second resource; or a last time unit of the second resource is adjacent to a start time unit of the first resource, and a next time unit of the last time unit of the second resource is the start time unit of the first resource. Alternatively, a time unit in which an end position of the second resource is located is contiguous with a time unit in which a start position of the first resource is located, or a time unit in which an end position of the first resource is located is contiguous with a time unit in which a start position of the second resource is located.

Manner 3: The first resource and the second resource are located in a first time window. In this manner, the first resource and the second resource are associated by setting the first resource and the second resource to be located in one time window. In this manner, in a possible implementation, the second resource is located before the first resource, a start time unit of the first time window is a start time unit of the second resource, and an end time unit of the first time window is an end time unit of the first resource. In another possible implementation, the second resource is located after the first resource, the start time unit of the first time window is a start time unit of the first resource, and the end time unit of the first time window is an end time unit of the second resource. A length of the first time window may be configured or predefined. When the length of the first time window is configured, the first time window may be configured based on the configuration information in S301. In a possible manner, in FIG. 6, a resource A, a resource B, and the first resource are contiguous or are separated by N time units. FIG. 6 shows an example of Manner 3. The resource A included in the second resource is located before the resource B, and the resource A and the resource are incontiguous in time domain. A start time unit of the first time window is a start time unit of the resource A, and an end time unit of the first time window is an end time unit of the first resource.

Manner 4: The first resource and the second resource are located in a same time unit. This manner may alternatively be understood as a case in which the first time window is one time unit in Manner 3. For example, the first resource and the second resource are located in a same slot. Alternatively, for example, the first resource and the second resource are located in a same slot or a same subframe. When the second resource includes a resource A of the synchronization information and a resource B of the channel information, a resource of the synchronization information, a resource of the channel information, and a resource of the control information are located in a same time unit.

Manner 5: The first resource and the second resource belong to a same transmission structure. For example, the first resource and the second resource belong to a same frame structure.

Manner 6: The terminal determines a second time window based on the first resource, where the second resource is located in the second time window. In this manner, for the first information, the base station may configure a plurality of candidate resources for transmitting the first information, and a candidate resource of the first information located in the second time window is the second resource. For example, the first information is the synchronization information, the configuration information configures a transmission resource (for example, the first information) for the synchronization information, and a configuration of the transmission resource is located in the second time window. For another example, the configuration information configures a plurality of candidate resources for the synchronization information, and the terminal receives the synchronization information on a candidate resource that is of the synchronization information and that is located in the second time window. For example, the first information is the channel information, and the configuration information configures a transmission resource for the channel information, where the transmission resource is located in the second time window. Alternatively, the configuration information configures a plurality of candidate resources for the channel information, and the terminal sends the channel information on a candidate resource that is of the channel information and that is located in the second time window.

In Manner 6, in a possible manner, the second time window meets one or more of the following: An X1^{th} time unit following the first resource is a time unit in which a start position of the second time window is located, or an X2^{th} time unit following the first resource is a time unit in which an end position of the second time window is located. In another possible manner, from a perspective of behavior of the terminal, the second time window may alternatively be understood as a time domain range that is determined based on the first resource and that is for receiving the synchronization information or sending the channel information. For example, the terminal device receives the synchronization information or sends the channel state information in a K1^{th} time unit following the first resource, or the terminal device receives the synchronization information after the K1^{th} time unit following the first resource. Alternatively, the terminal device starts to receive the synchronization information or send the channel information before a K2^{th} time unit following the first resource, or the terminal device completes receiving the synchronization information or sending the channel information before the K2^{th} time unit following the first resource. For example, the time unit is a symbol, and the terminal device starts to receive the synchronization information or send the channel information after a symbol of K2 following the first resource. For another example, the time unit is a slot, and the terminal device receives the synchronization information or sends the channel information in a next slot of a slot in which the first resource is located.

Manner 7: The terminal determines a second time window based on the second resource, where a candidate transmission resource of the control information in the second time window is the first resource. Manner 7 is similar to Manner 6. For the control information, the first information is the channel information, the configuration information configures a transmission resource (that is, the first resource) for the control information, and the transmission resource is located in the second time window. Alternatively, the base station may configure a plurality of candidate resources for transmitting the control information, and a candidate resource of the control information in the second time window is the first resource.

Based on an association between the first resource and the second resource, in a possible manner, the second resource is located before the first resource. In other words, the terminal first receives the synchronization information and/or sends the channel information and then receives the control information. In this manner, optionally, to further save energy, in this application, whether to receive the control information is further determined based on a transmission status of the first information. For example, the first information is the synchronization information. When the terminal receives the synchronization information on the second resource, the terminal receives the control information on the first resource. If the terminal does not receive the synchronization information, the terminal may not detect the control information. This manner can avoid a waste of power consumption caused when the terminal still receives the control information even if the terminal fails to complete synchronization, thereby reducing overheads of the terminal device. Similarly, when the first information is the channel information, if the terminal successfully sends the channel information, the terminal receives the control information on the first resource. If the terminal fails to send the channel information, the terminal may not receive the control information. For the base station, optionally, if the base station does not receive the channel information, the base station may not send the control information, so that power consumption of the base station can be further reduced.

It should be noted that the second resource may alternatively be located after the first resource, that is, the terminal may first receive the control information, and then receive the synchronization information and/or send the channel information.

In a possible manner, the channel information is uplink, that is, the channel information is sent by the terminal. In this manner, before the terminal sends the channel information, the method shown in FIG. 3 further includes: The terminal receives a downlink reference signal, and sends the channel information based on reference. For example, if the channel information is CSI, the reference signal is a CSI-RS.

In a possible embodiment, before step S301, the method shown in FIG. 3 further includes S300: The terminal sends second information, where the second information is used to trigger a network device to send the synchronization information. In other words, in this possible embodiment, the base station needs to send the synchronization information only after the terminal sends the second information, that is, when the terminal needs to receive the synchronization information. Power consumption of the terminal and the base station can be further reduced. The second information may alternatively be understood as request information of one or more of the synchronization information, the channel information, or the control information.

In a possible embodiment, the method shown in FIG. 3 further includes: The terminal sends a first uplink signal, where the first uplink signal is used to trigger one or more of the configuration information, the control information, the synchronization information, or the channel information. In this embodiment, the first uplink signal may alternatively be understood as a wakeup signal, and is used to enable the base station to switch from an energy saving state or a sleep state to a normal communication mode. For example, the base station learns from the first uplink signal that the terminal has an access or data transmission requirement, to send one or more of the configuration information, the control information, the synchronization information, or the channel information.

In a possible manner, the first uplink signal is associated with the control information, or a resource of the first uplink signal is associated with the first resource. For an association relationship between the first uplink signal and the first resource, refer to Manner 1 to Manner 7 in step S201. For example, the resource of the first uplink signal and the first resource are located in the first time window. In this manner, the first uplink signal, the synchronization information, the channel information, and the control information may be centrally distributed in the first time window, to implement fast synchronization or fast channel information reporting of the terminal, so that the terminal and the base station can exchange a data service based on the control information. For another example, there are N time units between the resource of the first uplink signal and the first resource. For another example, the resource of the first uplink signal, the second resource, and the first resource are contiguously distributed in time domain.

It should be noted that the first information may be the synchronization information or the channel information. When the first information is the synchronization information and the channel information, the second resource is the resource A that includes the synchronization information and the resource B that includes the channel information. The resource A and the resource B may be contiguous or incontiguous in time domain. In other words, the description of the association between the first resource and the second resource in S201 is also applicable to the resource A and the resource B. For example, similar to Manner 1, the resource A and the resource B may also be separated by K time units in time domain. Similar to Manner 2, the resource A and the resource B may also be contiguous in time domain. Similar to Manner 3, the resource A, the resource B, and the first resource are all located in the first time window. Similar to Manner 4, the resource A, the resource B, and the first resource are located in a same time unit. Similar to Manner 5, the resource A, the resource B, and the first resource belong to a same frame structure.

According to the foregoing communication method, the control information for scheduling data is associated with resources of the synchronization information and the channel information, so that the terminal can complete synchronization in a timely manner, or align the channel information with the base station in a timely manner when there is a data transmission requirement. For the base station, processes of sending the synchronization information and receiving the channel information may also be concentrated when there is a data transmission requirement. When there is no data transmission requirement, the base station may enter an energy saving state to reduce signal transmission, thereby implementing energy saving of the base station.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

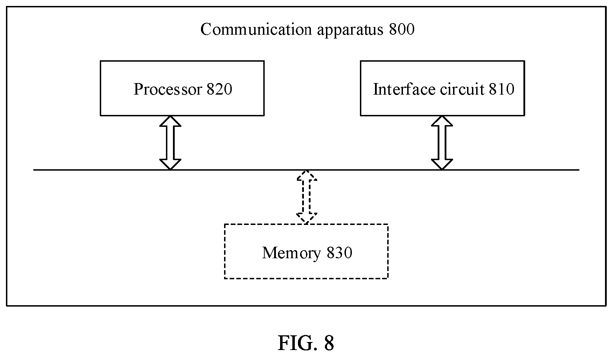

FIG. 7 and FIG. 8 are diagrams of possible structures of communication apparatuses according to embodiments of this application. The communication apparatuses may be configured to implement the functions of the terminal or the base station in the foregoing method embodiments, and therefore can also achieve beneficial effects of the foregoing method embodiments. In embodiments of this application, the communication apparatus may be the terminal 120 shown in FIG. 1, or may be the base station 110 shown in FIG. 1, or may be a module (for example, a chip) used in the terminal or the base station.

As shown in FIG. 7, a communication apparatus 700 includes a transceiver unit 710. Optionally, a processing unit 720 may be further included. The communication apparatus 700 is configured to implement functions of the terminal or the base station in the method embodiment shown in FIG. 3.

When the communication apparatus 700 is configured to implement the function of the terminal in the method embodiment shown in FIG. 3, the transceiver unit 710 is configured to receive configuration information, where the configuration information indicates a first resource and a second resource, the first resource is a resource of control information, the control information is used to schedule data transmission, the second resource is a resource of first information, and the first information is a resource of channel information and/or synchronization information. Further, the transceiver unit is further configured to receive the synchronization information and/or send the channel information. In a possible manner, the communication apparatus may further include a processing unit 720. When the first information is the channel information, the transceiver unit is further configured to receive a downlink reference signal, and the processing unit 720 is configured to determine the channel information based on the downlink reference signal.

In a possible manner, the transceiver unit 710 is further configured to send second information. The second information is used to trigger a network device to send the synchronization information.

In a possible manner, the transceiver unit 710 is further configured to send a first uplink signal before receiving the configuration information. The first uplink signal is used to trigger one or more of the configuration information, the control information, the synchronization information, or the channel information.

When the communication apparatus 700 is configured to implement the function of the base station in the method embodiment shown in FIG. 3, the transceiver unit 710 is configured to send configuration information, where the configuration information indicates a first resource and a second resource, the first resource is a resource of control information, the control information is used to schedule data transmission, the second resource is a resource of first information, and the first information is a resource of channel information and/or synchronization information.

In a possible manner, the transceiver unit 710 is further configured to send the synchronization information or receive the channel information.

In a possible manner, the transceiver unit 710 is further configured to receive second information. The second information is used to trigger the communication apparatus 700 to send the synchronization information. In this manner, optionally, the communication apparatus 700 further includes a processing unit 720. The processing unit is configured to determine, based on the second information, to send the synchronization information.

In a possible manner, before sending the configuration information, the transceiver unit 710 further receives a first uplink signal. The first uplink signal is used to trigger one or more of the configuration information, the control information, the synchronization information, or the channel information. The first uplink signal may alternatively be understood as a wake-up signal. In this manner, optionally, the processing unit 720 is configured to determine, based on the first uplink signal, to wake up, or switch the first uplink signal from a sleep state to an active state, or switch from an energy-saving mode to a normal communication mode.

For more detailed descriptions of the processing unit 720 and the transceiver unit 710, refer to related descriptions in the method embodiment shown in FIG. 3.

As shown in FIG. 8, a communication apparatus 800 includes an interface circuit 810. In a possible manner, the communication apparatus 800 further includes a processor 820, and the processor 820 and an interface circuit 810 are coupled to each other. It may be understood that the interface circuit 810 may be a transceiver or an input/output interface. Optionally, the communication apparatus 800 may further include a memory 830, configured to store instructions executed by the processor 820, or store input data required by the processor 820 to run instructions, or store data generated after the processor 820 runs instructions.

When the communication apparatus 800 is configured to implement the method shown in FIG. 3, the processor 820 is configured to implement a function of the processing unit 720, and the interface circuit 810 is configured to implement a function of the transceiver unit 710.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements functions of the base station in the method embodiments. That the chip in the base station receives information from a terminal may be understood as that the information is first received by another module (for example, a radio frequency module or an antenna) in the base station, and then sent by the module to the chip in the base station. That the chip in the base station sends information to a terminal may be understood as that the information is first sent to another module (for example, a radio frequency module or an antenna) in the base station, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer programs or instructions. When the computer programs or the instructions are loaded and executed on a computer, the procedures or functions in embodiments of this application are completely or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both the volatile storage medium and the non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving configuration information, wherein the configuration information indicates a first resource and a second resource, the first resource is a resource of control information, the control information is used to schedule data transmission, the second resource is a resource of first information, and the first information is a resource of channel information and/or synchronization information; and
receiving the control information on the first resource, and receiving the synchronization information or sending the channel information on the second resource, wherein
the first resource is associated with the second resource.

2. The method according to claim 1, wherein that the first resource is associated with the second resource is specifically that the first resource and the second resource are separated by M time units in time domain, and M is a positive integer.

3. The method according to claim 1 or 2, wherein that the first resource is associated with the second resource is specifically:
the first resource and the second resource are located in a same time unit, or the first resource and the second resource belong to a same transmission structure.

4. The method according to any one of claims 1 to 3, wherein that the first resource is associated with the second resource is specifically:
the first resource and the second resource are contiguous in time domain.

5. The method according to any one of claims 1 to 4, wherein the second resource is located before the first resource.

6. The method according to any one of claims 1 to 5, wherein that the first resource is associated with the second resource is specifically that the first resource and the second resource are located in a first time window.

7. The method according to claim 6, wherein the first time window meets at least one of the following:
a start time unit of the first time window is a start time unit of the second resource; or
an end time unit of the first time window is an end time unit of the first resource.

8. The method according to any one of claims 1 to 7, wherein that the first resource is associated with the second resource is specifically:
a second time window is determined based on the second resource, wherein the first resource is located in the second time window; or
the second time window is determined based on the first resource, wherein the second resource is located in the second time window.

9. The method according to any one of claims 1 to 8, wherein receiving the control information on the first resource, and receiving the synchronization information or sending the channel information on the second resource are specifically:
when the synchronization information is received on the second resource, receiving the control information on the first resource; or
when the channel information is sent on the second resource, receiving the control information on the first resource.

10. The method according to any one of claims 1 to 9, wherein the synchronization information is a downlink reference signal, or the synchronization information is time-frequency information.

11. The method according to claim 10, wherein the synchronization information is the time-frequency information, and the method further comprises: sending second information, wherein the second information is used to trigger a network device to send the synchronization information.

12. The method according to any one of claims 1 to 11, wherein the channel information is an uplink reference signal, or the channel information is channel state information.

13. The method according to any one of claims 1 to 12, wherein the channel information is the channel state information, and the method further comprises:
receiving a channel state information reference signal, and sending the channel state information based on the channel state information reference signal.

14. A communication method, wherein the method comprises:
sending configuration information, wherein the configuration information indicates a first resource and a second resource, the first resource is a resource of control information, the control information is used to schedule data transmission, the second resource is a resource of first information, and the first information is a resource of channel information and/or synchronization information; and
sending the control information on the first resource, and sending the synchronization information or receiving the channel information on the second resource, wherein the first resource is associated with the second resource.

15. The method according to claim 14, wherein that the first resource is associated with the second resource is specifically that the first resource and the second resource are separated by M time units in time domain, and M is a positive integer.

16. The method according to claim 14 or 15, wherein the first resource and the second resource are located in a same time unit, or the first resource and the second resource belong to a same transmission structure.

17. The method according to any one of claims 14 to 16, wherein that the first resource is associated with the second resource is specifically that the first resource and the second resource are contiguous in time domain.

18. The method according to any one of claims 14 to 17, wherein the second resource is located before the first resource.

19. The method according to any one of claims 14 to 18, wherein that the first resource is associated with the second resource is specifically that the first resource and the second resource are located in a first time window.

20. The method according to claim 19, wherein the first time window meets at least one of the following:
a start time unit of the first time window is a start time unit of the second resource; or
an end time unit of the first time window is an end time unit of the first resource.

21. The method according to any one of claims 14 to 19, wherein that the first resource is associated with the second resource is specifically:
a second time window is determined based on the second resource, wherein the first resource is located in the second time window; or
the second time window is determined based on the first resource, wherein the second resource is located in the second time window.

22. The method according to any one of claims 14 to 21, wherein the synchronization information is a downlink reference signal, or the synchronization information is time-frequency information.

23. The method according to claim 22, wherein the synchronization information is the time-frequency information, and the method further comprises: receiving second information, wherein the second information is used to trigger a network device to send the synchronization information.

24. The method according to any one of claims 14 to 23, wherein the channel information is an uplink reference signal, or the channel information is channel state information.

25. The method according to any one of claims 14 to 24, wherein the channel information is the channel state information, and the method further comprises:
sending a channel state information reference signal.

26. A communication apparatus, wherein the communication apparatus comprises a unit or a module configured to perform the method according to any one of claims 1 to 13, or the communication apparatus comprises a unit or a module configured to perform the method according to any one of claims 14 to 25.

27. A computer-readable storage medium, wherein the computer-readable storage medium comprises instructions, and when the instructions are run, the method according to any one of claims 1 to 13 is implemented, or the method according to any one of claims 14 to 25 is implemented.

28. A computer program product, wherein the computer program product comprises instructions, and when the instructions are run, the method according to any one of claims 1 to 13 is implemented, or the method according to any one of claims 14 to 25 is implemented.
